(19) **Europäisches Patentamt**
**European Patent Office**
**Office européen des brevets**

(11) **EP 2 300 512 B1**

(12) **EUROPEAN PATENT SPECIFICATION**

(45) Date of publication and mention
of the grant of the patent:
**21.08.2013 Bulletin 2013/34**

(51) Int Cl.:
***C08G 63/183*** *(2006.01)* ***C08L 67/02*** *(2006.01)*

(21) Application number: **09772913.1**

(22) Date of filing: **02.07.2009**

(86) International application number:
**PCT/IB2009/006358**

(87) International publication number:
**WO 2010/001252 (07.01.2010 Gazette 2010/01)**

(54) **COPOLYESTER FOR SHRINK FILM APPLICATIONS**

COPOLYESTER FÜR SCHRUMPFFOLIENANWENDUNGEN

COPOLYESTER POUR APPLICATIONS DE PELLICULE RETRACTABLE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **02.07.2008 US 77502 P**

(43) Date of publication of application:
**30.03.2011 Bulletin 2011/13**

(73) Proprietor: **Invista Technologies S.à.r.l.**
**9000 St. Gallen (CH)**

(72) Inventor: **BAYER, Uwe**
**86459 Gessertshausen (DE)**

(74) Representative: **Watterson, Peer Marten John et al**
**Marks & Clerk (Luxembourg) LLP**
**44 rue de la Vallée**
**B.P. 1775**
**1017 Luxembourg (LU)**

(56) References cited:
**EP-A1- 1 655 322 US-B1- 6 362 306**

• **DATABASE WPI Week 199351 Thomson
Scientific, London, GB; AN 1993-408635
XP002560670 & JP 05 305667 A (KANEBO LTD)
19 November 1993 (1993-11-19)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF INVENTION**

This invention relates to heat-shrinkable films, more particularly to copolyester compositions comprising terephthalic acid, isophthalic acid, ethylene glycol and diethylene glycol that are useful to manufacture heat-shrinkable polyester films.

**BACKGROUND OF INVENTION**

Heat-shrinkable plastic films are used to hold objects together and as an outer wrapping for bottles, cans and other kinds of containers. For example, such films are used for covering parts of or the entire container for the purpose of labeling and tamper protection of containers, and for wrapping groups of objects into a single package for handling and shipping.

Shrink films or heat-shrinkable films refer to uniaxially oriented films which are widely used as primary labels on soft drink bottles. The film primarily shrinks in the stretched direction and has a little shrinkage in the unstretched direction. The films are manufactured on conventional film lines in which the molten polymer is extruded onto a chilled roll, heated to a temperature above the polymer glass transition temperature and drawn in the transverse direction about 4 to 5 times. The film is annealed at a temperature about the polymer glass transition temperature, cooled, slit and wound up on rolls. The film roll is unwound printed, folded, and an adhesive solvent applied to one edge. A seal is formed by overlapping the edges and applying pressure to obtain a firm seal, and rewound. The film is then cut to the desired length, opened into a tube and after being wrapped around an article, for example a bottle, the film is shrunk by the application of heat, either by hot air, infra red energy or steam, in an oven. Typically, the adhesive solvent is tetrahydrofuran or a mixture of tetrahydrofuran with up to 33 vol. % of 1,3-dioxolane.

The materials conventionally used for the heat-shrinkable films mentioned above include polyvinylchloride (PVC), polystyrene (OPS), oriented polyethylene, oriented polypropylene, and certain copolyesters. PVC is the most widely used material due to its excellent shrink properties and clarity. However, environmental concerns exist with PVC. Substitute materials, which are more environmentally friendly and recyclable, should have comparable heat-shrink properties.

Polymeric materials which are being used to substitute for PVC for shrink films are copolyesters based on 1,4-cyclohexanedimethanol copolyethylene terephthalate (known as PETG) and blends of PETG and other copolyesters. These copolyesters are disclosed in U.S. Pat. Nos. 5,859,116 and 6,362,306. These copolyesters have problems when used for heat-shrinkable films, such as low ductility or toughness, and a slight haze in the film. The cost of the 1,4-cyclohexanedimethanol (CHDM) monomer used to produce these copolyesters is also high.

JP 5 305667 A discloses polyesters for films, comprising terephthalic acid, isophthalic acid, diethylene glycol and propane diol.

Thus, there exists a need in the art to have a heat-shrinkable copolyester film with improved toughness, less haze and low cost.

**SUMMARY OF THE INVENTION**

In accordance with the present invention, a polyester composition has been found that can be made into a heat-shrinkable film with improved toughness, less haze and low cost. The present invention can be characterized by a polyester composition comprising a diacid component and a diol component, wherein the diacid component comprises: i) isophthalic acid present at a concentration in the range of from 23 mole % to 30 mole % of the total diacid, and ii) terephthalic acid; and wherein the diol component comprises: i) diethylene glycol present at a concentration in the range of from 1.1 mole % to 3.5 mole % of the total diol, and ii) ethylene glycol. The present invention also relates to a film produced from the polyester composition and processes for producing the film.

**DETAILED DESCRIPTION OF THE INVENTION**

The present invention can be characterized by a polyester composition comprising a diacid component and a diol component, wherein the diacid component comprises: i) isophthalic acid present at a concentration in the range of from 23 mole % to 30 mole % of the total diacid, and ii) terephthalic acid; and wherein the diol component comprises: i) diethylene glycol present at a concentration in the range of from 1.1 mole % to 3.5 mole % of the total diol, and ii) ethylene glycol. The isophthalic acid can be present at a concentration in the range of from 23 mole % to 30 mole % of the total diacid, for example from 24 mole % to 28 mole % of the total diacid. The diethylene glycol can be present at a concentration in the range of from 1.1 mole % to 3.5 mole % of the total diol, for example from 1.5 mole % to 3.2 mole

% of the total diol or from 2.7 mole % to 3.2 mole % of the total diol. The terephthalic acid can be present at a concentration in the range of from 70 mole % to 77 mole % of the total diacid, for example from 72 mole % to 76 mole % of the total diacid. The ethylene glycol can be present at a concentration in the range of from 96.5 mole % to 98.9 mole % of the total diol, for example from 96.8 mole % to 98.5 mole % of the total diol or from 96.8 mole % to 97.3 mole % of the total diol. The isophthalic acid and diethylene glycol can be present at a sum concentration of from 24 mole % to 33 mole % of the total composition, for example from 27 mole % to 31 mole % of the total composition. Suitably the molecular weight of the copolyester (Inherent Viscosity, IhV) can be 0.65 dl/g or more, for example 0.70 dl/g or more, to have sufficient melt viscosity for casting a film. The IhV can be chosen knowing that there is a high (0.05 to 0.1 dl/g) loss in IhV in melt extrusion, due to the level of moisture after drying at the low temperatures required for these copolyesters containing a high amount of comonomers. Suitably, the glass transition temperature (Tg) of the composition can be 70° C or more. Generally, the relationship of glass transition temperature (Tg) with isophthalic acid (IPA) and diethylene glycol (DEG) can be represented by the following equation:

$$Tg\,(^0\,C) = 80.95 - 0.18\;IPA[mole\;\%] - 1.74\;DEG\;[mole\;\%]$$

This relationship is accurate in an IPA concentration range of from 6 mole % to 33 mole % and in a DEG concentration range of from 1.1 mole % to 3.5 mole %. Generally, an isophthalic acid concentration of 20 mole % or more results in an amorphous stretched film. Therefore, a DEG concentration of 3.5 mole % or less can produce a Tg of 70°C or more.

The above embodiment of the present can further comprise an additive. The additive can be at least one member selected from the group consisting of dye, pigment, filler, branching agent, anti-blocking agent, antioxidant, anti-static agent, biocide, blowing agent, coupling agent, flame retardant, heat stabilizer, impact modifier, ultraviolet light stabilizer, visible light stabilizer, lubricant, plasticizer, processing aid, acetaldehyde, oxygen scavenger, barrier polymer, slip agent, and mixtures thereof. The additive can be added during polymerization or as a master batch at the melt extrusion of the film.

Another embodiment of the present invention is a film comprising a polyester composition comprising a diacid component and a diol component, wherein the diacid component comprises: i) isophthalic acid present at a concentration in the range of from 23 mole % to 30 mole % of the total diacid, and ii) terephthalic acid; and wherein the diol component comprises: i) diethylene glycol present at a concentration in the range of from 1.1 mole % to 3.5 mole % of the total diol, and ii) ethylene glycol. The film can be a shrinkable film, for example a heat-shrinkable film. The film can have a toughness of 200 MPa or more when processed at a stretch ratio of 5: 1 at a temperature of 80° C. The shrinkage of the film in the stretched direction can be 50% or more at 80°C. The shrinkage of the film in the stretched direction can be 55% or more at 90°C. The shrinkage of the film in the non-stretched direction can be 10% or less at 80°C. The density of the film can be 1.350 g/ cm$^3$ or less, for example 1.340 g/cm$^3$ or less. The film can have a haze of 1 % or less through a thickness of 0.05 mm. Suitably, the inherent viscosity (IhV) of the film can be 0.60 dl/g or more, for example 0.65 dl/g or more. Suitably, the glass transition temperature (Tg) of the polyester composition can be 70° C or more.

In the above embodiment of the present invention the isophthalic acid can be present at a concentration in the range of from 23 mole % to 30 mole % of the total diacid, for example from 24 mole % to 28 mole % of the total diacid. The diethylene glycol can be present at a concentration in the range of from 1.1 mole % to 3.5 mole % of the total diol, for example from 1.5 mole % to 3.2 mole % of the total diol or from 2.7 mole % to 3.2 mole % of the total diol. The terephthalic acid can be present at a concentration in the range of from 70 mole % to 77 mole % of the total diacid, for example from 72 mole % to 76 mole % of the total diacid. The ethylene glycol can be present at a concentration in the range of from 96.5 mole % to 98.9 mole % of the total diol, for example from 96.8 mole % to 98.5 mole % of the total diol or from 96.8 mole % to 97.3 mole % of the total diol. The isophthalic acid and diethylene glycol can be present at a sum concentration of from 24 mole % to 33 mole % of the total composition, for example from 27 mole % to 31 mole % of the total composition.

Another embodiment of the present invention is a film comprising a polyester composition, wherein the film has i) a shrinkage in the stretched direction of 50% or more at 80°C, and ii) a toughness of 200 MPa or more. The shrinkage of the film in the stretched direction can be 55% or more at 90°C. The film can further have a shrinkage in the non-stretched direction of 10% or less at 80°C. The film can be a heat-shrinkable film. The density can be 1.350 g/cm$^3$ or less, for example 1.340 g/cm$^3$ or less. The film can have a haze of less than 1 % through a thickness of 0.05 mm. Suitably, the inherent viscosity (IhV) of the film can be 0.60 dl/g or more, for example 0.65 dl/g or more. Suitably, the glass transition temperature (Tg) of the polyester composition can be 70° C or more.

An embodiment not according to the present invention is a process for making the film comprising: i) extruding the polyester composition at a temperature in the range of from 245°C to 260°C, and ii) stretching the cast film in one direction at from 20% per second to 30% per second with a constant draw ratio of from 4.0 to 5.5.

Polyester compositions useful in uniaxially oriented films for use in heat-shrinkable applications, such as labels, can have a glass transition temperature of the polyester composition of 70°C or more; a lower Tg causes tackiness and uneven drawing in the film process and will increase the time to dry the copolyester. Typically, for good solvent seaming performance the film needs to be amorphous, a slight degree of crystallization, generally formed during the film stretching process, reduces the rate and uniformity of penetration of the solvent. An amorphous uniaxially drawn film will not show a crystallization exotherm or an endotherm melting peak during the second heating cycle of a DSC analysis. Alternatively, for an amorphous drawn film, the density can be 1.350 $g/cm^3$ or less, for example 1.340 $g/cm^3$ or less.

The copolyester compositions can be prepared by conventional polymerization methods using a trans-esterification of the ester of the diacids or the direct esterification of the diacids. For transesterification conventional catalyst compounds based on manganese, zinc, etc. can be used, or combinations of these, sequestered with a phosphorus compound prior to polycondensation. Typical polycondensation catalyst compounds based on antimony, germanium, titanium, aluminum, tin, etc are used, or combinations of these. Titanium compounds can also be used to catalyze the trans-esterification reaction. The color tone of the copolyester can be adjusted by additives such as cobalt salts, inorganic or organic dyes and pigments.

The copolyester compositions are formed into films by melt extrusion of the dried copolyester onto a chilled set of casting rolls. The stretching of the films can be by any usual method such the tenter stretching method. The stretching in the transverse direction can be done by heating the film to a temperature in the range of about Tg to Tg +20° C, for example in the range of about Tg+10° C to Tg+20° C. The stretch ratio can be in the range of about 4 to about 5.5x, for example about 4.5 to 5.5x. The stretch rate can be in the range of from about 10 to 50 $cm.sec^{-1}$. A slight stretch in the machine direction can be used to provide a film that shrinks uniformly on heating. The final thickness of the uniaxially drawn film can be in the range of 0.05 to 0.5 mm, for example in the range of 0.2 to 0.4 mm.

The shrinkage characteristics of the film can be optimized by the stretch ratio and temperature of drawing. It is important it obtain a film that shrinks at a uniform rate as it is heated in the shrink tunnel to minimize wrinkles, and be able to shrink at high temperatures (95° C) more than about 60% for labeling contoured bottles.

TEST METHODS

Inherent Viscosity is measured according the method of ASTM D 4603-96, using dichloroacetic acid as the solvent.

Glass transition temperature (Tg) is measured according to ASTM D 3418-97. A sample of about 10 mg is cut from various sections of the polymer chip and sealed in an aluminum pan. A scan rate of 10° C/min. is used in a TA Instruments DSC Q-100 DSC unit under a nitrogen atmosphere. The sample is heated to 300° C, held for 5 minutes and cooled to 0° C at a scan rate of 10° C/min prior to the second heating cycle. The Tg is measured on the $2^{nd}$ heating cycle. The DSC heating scans ($1^{st}$ and $2^{nd}$ heating cycles) are used to determine whether the copolyester composition exhibited any crystallinity.

The density of the stretched film equals the total density (measured using a density column) minus the density of any additives; such that the final reported density of the stretched film only represents that of the copolyester stretched film and not that of the additives plus the copolyester stretched film.

Thermal shrinkage of the stretched films is determined from a sample cut from the center of the stretched film. The sample, length $L_0$, is placed in a holder, free from contact with the edges of the holder, and immersed in a constant temperature bath for 30 seconds. The water bath temperature is controlled at various temperatures. The sample is removed from the bath and quickly dried at room temperature. The thermal shrinkage is calculated by measuring the linear dimensions, $L_1$, of the shrunk sample. The percent shrinkage is calculated as follows:

$$S, \% = (L_0 - L_1)/L_0 \times 100\%$$

The seam strength is measured subjectively by assessing the manual force required to open the seam.

The film physical properties are measured according to ASTM D 882-02. Toughness is defined as the product of tensile strength (MPa) and elongation at break (%/100).

The optical properties, haze, transmittance and clarity are measured with a BYK-Gardner Haze-guard spectrophotometer according to ASTM D 1003-00. Gloss is measured at a 45° angle according to ASTM D 2457-03.

The diethylene glycol (DEG) content of the polymer is determined by hydrolyzing the polymer with a solution of KOH in methanol in a reaction vessel with air cooler refluxing at 135$\pm$5°C for approximately 2.5 hours. The KOH in methanol is at concentration of 1.5 moles/L. The KOH is available from Merck and is analytical purity. As internal standard tetraethyleneglycol dimethyl ether is used. After cooling to room temperature, the solution is neutralized with aqueous HCl. The aqueous HCl is at a concentration of about 27%. The suspension is then filtrated and the filtrate is then analyzed by gas chromatography. The gas chromatography apparatus is a FID Detector (Focus GC) from Thermo Electron.

The isophthalic acid (IPA) content of the polymer is determined using a Surveyor LS from ThermoFisher (HPLC) with an UV Detector. The analysis is done via saponification of the polymer sample with KOH in methanol at 120 °C for 1 hour under reflux. After cooling, the contents were neutralized with HCl, filtered over a folded filter. About 100 μl of the filtrate is added into an autosampler vial and diluted with 900 μl methanol. 5-Hydroxy-isophthalte is used as internal standard; the standard is added before saponification of the polymer. The solution is analyzed by HPLC at 240 nm using an isocratic eluent (85% [water with 1.0 volume % acetic acid] and 15% acetonitrile).

EXAMPLES

The copolyesters are prepared by mixing a given amount of IPA in a paste tank of terephthalic acid and ethylene glycol. DEG is formed naturally during the esterification reaction, and additional DEG is added to the paste as necessary.

Example 1

Copolyesters containing a range of IPA and DEG comonomer amounts were prepared and converted into a stretched film. Samples I and 2 represent the present invention. Samples 3 and 4 represent comparative compositions. Additionally, a sample of PETG (Embrace Copolyester available from Eastman) was used as a control. Analysis of this PETG resin indicated a composition containing 19.8 mole % CHDM and 9.5 mole % DEG, having an IhV of 0.80 and a Tg of 71.1°C. The comonomer concentrations for Samples 1-4 are set forth in Table 1.

Table 1

| Sample | IPA, mole % of diacids | DEG, mole % of diols | Total Comonomer, Mole % | Inherent Viscosity, dl/g | Tg.°C |
|---|---|---|---|---|---|
| 1 (Inventive) | 24.3 | 2.99 | 27.3 | 0.68 | 72.8 |
| 2 (Inventive) | 27.8 | 3.12 | 30.9 | 0.70 | 72.2 |
| 3 (Comparative) | 19.8 | 2.95 | 22.7 | 0.66 | 74.0 |
| 4 (Comparative) | 17.6 | 1.2 | 18.8 | 0.71 | 75.5 |

The cast film was prepared on a pilot plant machine, extruding the melt at 253° C through a die of width 200 cm onto a chilled roll (70° C) operating at 2.3 to 2.6 m/min. to give an unoriented film thickness of 250 micron. The cast film was stretched in one direction (TD) at 25%/sec on a laboratory film stretcher at different drawing temperatures (75, 80 and 90° C) using a constant draw ratio of 5.0 for each run. A 12 x 12 cm sample was cut from the film for testing.

The seam strength of films stretched at 80° C using different solvents (tetrahydrofuran (THF), 1,3-dioxolane (1,3-D) and vol. % mixtures), the IhV and the density, for the films stretched at 80° C was measured and the results set forth in Table 2.

Table 2

| Sample | Inherent Viscosity, dl/g | Seam Strength (visual rating) | | | | Density, g/cm³ |
|---|---|---|---|---|---|---|
| | | Solvent | | | | |
| | | 100% THF | 100% 1,3-D | 70% THF/30% 1,3-D | 80% THF/20% 1,3-D | |
| 1 | 0.63 | weak | satisfactory | weak | weak | 1.345 |
| 2 | 0.65 | weak | good | satisfactory | satisfactory | 1.339 |
| 3 | 0.58 | none | weak | none | weak | 1.352 |
| 4 | 0.66 | none | none | none | none | 1.355 |
| PETG | 0.66 | good | good | good | good | 1.319 |

Sample 4 had such poor seam strength that the sample was not further tested for shrinkage, physical properties or optical properties.

The shrinkage of the films in the stretched direction (TD), stretched at the different temperatures, were measured at 70, 80, 90 and 95° C, and the results set forth in Table 3.

Table 3

| Sample | Process Stretch Temp., °C | Shrinkage TD, % at different temperatures | | | |
|---|---|---|---|---|---|
| | | 70° C | 80° C | 90° C | 95° C |
| 1 | 75 | 30 | 61 | 72 | 74 |
| | 80 | 18 | 46 | 53 | 58 |
| | 90 | 37 | 56 | 59 | 66 |
| 2 | 75 | 41 | 71 | 77 | 79 |
| | 80 | 28 | 56 | 67 | 73 |
| | 90 | 39 | 54 | 66 | 69 |
| 3 | 75 | 20 | 51 | 57 | 62 |
| | 80 | 12 | 37 | 42 | 44 |
| | 90 | 34 | 52 | 57 | 60 |
| PETG | 75 | 43 | 66 | 75 | 76 |
| | 80 | 34 | 52 | 61 | 66 |
| | 90 | 36 | 54 | 64 | 66 |

The shrinkage of these films was measured in the non-stretched direction (MD) and the results set forth in Table 4.

Table 4

| Sample | Process Stretch Temp., °C | MD Shrinkage, % at different temperatures | | | |
|---|---|---|---|---|---|
| | | 70°C | 80°C | 90°C | 95°C |
| 1 | 75 | 2.5 | 8.8 | 10 | 5.1 |
| | 80 | 0 | 4.4 | 3.2 | 1.9 |
| | 90 | 12.5 | 16.3 | 11.9 | 10 |
| 2 | 75 | 7.5 | 12.5 | 10 | 6.9 |
| | 80 | 2.5 | 8.8 | 7.5 | 6.3 |
| | 90 | 13.8 | 18.2 | 16.3 | 12.5 |
| 3 | 75 | -2.5 | 5.7 | 2.5 | 2.5 |
| | 80 | -1.9 | 0 | 0 | -0.7 |
| | 90 | 9.4 | 16.9 | 12.5 | 12.5 |
| PETG | 75 | 6.3 | 10.1 | 12.5 | 12.5 |
| | 80 | 8.2 | 8.8 | 5 | 6.3 |
| | 90 | 13.2 | 18.8 | 16.3 | 13.8 |

Example 2

The physical properties of the films prepared in Example 1 were measured in the TD and the results set forth in Table 5.

Table 5

| Sample | Stretch Temp., °C | Tensile Strength, MPa | Elongation at Break, % | Toughness, MPa | Young's Modulus. MPa |
|---|---|---|---|---|---|
| 1 | 75 | 384 | 53 | 204 | 7,777 |
| | 80 | 359 | 71 | 255 | 6,295 |
| | 90 | 142 | 181 | 257 | 3,192 |
| 2 | 75 | 408 | 59 | 241 | 7,050 |
| | 80 | 339 | 76 | 258 | 5,585 |
| | 90 | 143 | 153 | 219 | 3,370 |
| 3 | 75 | 366 | 49 | 179 | 8,257 |
| | 80 | 370 | 66 | 244 | 7,137 |
| | 90 | 147 | 189 | 278 | 3,153 |
| PETG | 75 | 301 | 39 | 117 | 6,156 |
| | 80 | 247 | 63 | 156 | 4,528 |
| | 90 | 151 | 209 | 316 | 2,312 |

Example 3

The optical properties of the films produced in Example 1 were measured and the results set forth in Table 6.

Table 6

| Sample | Stretch Temp., ° C | Transmittance, % | Haze, % | Clarity, % | Gloss, at 45° |
|---|---|---|---|---|---|
| 1 | 75 | 92.4 | 0.43 | 99.9 | 115 |
| | 80 | 92.4 | 0.42 | 100 | 115 |
| | 90 | 93.2 | 0.36 | 99.7 | 113 |
| 2 | 75 | 92.3 | 0.64 | 99.8 | 115 |
| | 80 | 92.7 | 0.55 | 99.9 | 115 |
| | 90 | 93.3 | 0.54 | 99.6 | 112 |
| 3 | 75 | 91.8 | 0.54 | 99.9 | 116 |
| | 80 | 92.5 | 0.44 | 99.8 | 116 |
| | 90 | 93.1 | 0.55 | 99.4 | 112 |
| PETG | 75 | 92.2 | 1.85 | 99.1 | 111 |
| | 80 | 92.8 | 2.07 | 98.7 | 109 |
| | 90 | 93.4 | 4.05 | 91.4 | 99 |

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within the scope of the appended claims.

**Claims**

1.  A polyester composition comprising a diacid component and a diol component, wherein the diacid component comprises: i) isophthalic acid present at a concentration in the range of from 23 mole % to 30 mole % of the total diacid, and ii) terephthalic acid; and
wherein the diol component comprises: i) diethylene glycol present at a concentration in the range of from 1.1 mole % to 3.5 mole % of the total diol, and ii) ethylene glycol.

2. A polyester composition according to claim 1 wherein the isophthalic acid is present at a concentration in the range of from 24 mole % to 28 mole % of the total diacid.

3. A polyester composition according to any of claims 1 or 2, wherein the diethylene glycol is present at a concentration in the range of from about 1.5 mole % to about 3.2 mole % of the total diol, preferably from 2.7 mole % to 3.2 mole % of the total diol.

4. A polyester composition according to any preceding claim, wherein the isophthalic acid and diethylene glycol are present at a sum concentration of from 24 mole % to 33 mole % of the total composition, preferably from 27 mole % to 31 mole % of the total composition.

5. A polyester composition according to any preceding claim, wherein the composition has a glass transition temperature of 70°C or more, as determined according to ASTM D 3418-97.

6. A polyester composition according to any preceding claim, wherein the composition has an inherent viscosity of 0.65 dl/g or more, as determined by ASTM D 4603-96.

7. A polyester composition according to any preceding claim, further comprising an additive.

8. A polyester composition according to claim 7 wherein the additive comprises at least one member selected from the group consisting of dye, pigment, filler, branching agent, antiblocking agent, antioxidant, anti-static agent, biocide, blowing agent,
coupling agent, flame retardant, heat stabilizer, impact modifier, ultraviolet light stabilizer, visible light stabilizer, lubricant, plasticizer, processing aid, acetaldehyde,
oxygen scavenger, barrier polymer, slip agent, and mixtures thereof.

9. A film comprising the polyester composition of claim 1.

10. A film according to claim 9, wherein the film has a toughness as defined in the description of 200 MPa or more, as determined according to ASTM D 882-02.

11. A film according to any of claims 9 or 10, wherein the film has a shrinkage in the stretched direction of 50% or more at 80°C, as determined according to the method in the description.

12. A film according to any of claims 9 to 11, wherein the film is a heat-shrinkable film.

13. A film according to any of claims 9 to 12, wherein the film has a haze of 1 % or less measured through a film thickness of 0.05 mm, as determined according to ASTM D 1003-00.

14. A film according to any of claims 9 to 13, wherein the film has a shrinkage in the stretched direction of 55% or more at 90°C, as determined according to the method in the description.

15. A film according to any of claims 9 to 14 wherein the film further has a shrinkage in the non-stretched direction of 10% or less at 80°C, as determined according to the method in the description.

16. A film according to any of claims 9 to 15, wherein the film has a density as defined in the description of 1.350 g/cm3 or less, preferably of 1.340 g/cm3 or less.

17. A film according to any of claims 9 to 16, wherein the film has an inherent viscosity of 0.60 dl/g or more, as determined according to ASTM D 4603-96.

**Patentansprüche**

1. Polyesterzusammensetzung umfassend eine Disäurekomponente und eine Diolkomponente, wobei die Disäurekomponente Folgendes umfasst: i) Isophthalsäure, die in einer Konzentration im Bereich von 23 Mol-% bis 30 Mol-%, auf die gesamte Disäure bezogen, vorliegt, und (ii) Terephthalsäure; und
wobei die Diolkomponente Folgendes umfasst: i) Diethylenglykol, das in einer Konzentration im Bereich von 1,1 Mol-% bis 3,5 Mol-%, auf das gesamte Diol bezogen, vorliegt, und ii) Ethylenglykol.

2. Polyesterzusammensetzung nach Anspruch 1, wobei die Isophthalsäure in einer Konzentration im Bereich von 24 Mol-% bis 28 Mol-%, auf die gesamte Disäure bezogen, vorliegt.

3. Polyesterzusammensetzung nach einem der Ansprüche 1 oder 2, wobei das Diethylenglykol in einer Konzentration im Bereich von etwa 1,5 Mol-% bis etwa 3,2 Mol-%, auf das gesamte Diol bezogen, bevorzugt von 2,7 Mol-% bis 3,2 Mol-%, auf das gesamte Diol bezogen, vorliegt.

4. Polyesterzusammensetzung nach einem der vorhergehenden Ansprüche, wobei die Isophthalsäure und das Diethylenglykol in einer Gesamtkonzentration von 24 Mol-% bis 33 Mol-%, auf die gesamte Zusammensetzung bezogen, bevorzugt von 27 Mol-% bis 31 Mol-%, auf die gesamte Zusammensetzung bezogen, vorliegen.

5. Polyesterzusammensetzung nach einem der vorhergehenden Ansprüche, wobei die Zusammensetzung eine Glasübergangstemperatur von 70 °C oder mehr, wie ASTM D 3418-97 gemäß bestimmt, aufweist.

6. Polyesterzusammensetzung nach einem der vorhergehenden Ansprüche, wobei die Zusammensetzung eine inhärente Viskosität von 0,65 dl/g oder mehr, wie nach ASTM D 4603-96 bestimmt, aufweist.

7. Polyesterzusammensetzung nach einem der vorhergehenden Ansprüche, des Weiteren ein Zusatzmittel umfassend.

8. Polyesterzusammensetzung nach Anspruch 7, wobei das Zusatzmittel mindestens ein Gruppenmitglied umfasst ausgewählt aus der Gruppe bestehend aus Farbstoff, Pigment, Füllstoff, Verzweigungsmittel, Antiblockmittel, Antioxidationsmittel, Antistatikmittel, Biozid, Treibmittel, Kopplungsmittel, Flammschutzmittel, Wärmestabilisator, Schlagzähigkeitsverbesserer, Violettlichtstabilisator, Lichtstabilisator für sichtbares Licht, Schmiermittel, Weichmacher, Verarbeitungshilfsmittel, Acetaldehyd, Sauerstofffänger, Barrierepolymer, Gleitmittel und Mischungen davon.

9. Folie umfassend die Polyesterzusammensetzung nach Anspruch 1.

10. Folie nach Anspruch 9, wobei die Folie eine Zähigkeit, wie in der Beschreibung definiert, von 200 MPa oder mehr, wie ASTM D 882-02 gemäß bestimmt, aufweist.

11. Folie nach einem der Ansprüche 9 oder 10, wobei die Folie eine Schrumpfung in Streckrichtung von 50 % oder mehr bei 80 °C, wie dem Verfahren in der Beschreibung gemäß bestimmt, aufweist.

12. Folie nach einem der Ansprüche 9-11, wobei die Folie eine wärmeschrumpfbare Folie ist.

13. Folie nach einem der Ansprüche 9 bis 12, wobei die Folie eine Trübung von 1 % oder weniger, durch eine Foliendicke von 0,05 mm gemessen, wie ASTM D 1003-00 gemäß bestimmt, aufweist.

14. Folie nach einem der Ansprüche 9 bis 13, wobei die Folie eine Schrumpfung in Streckrichtung von 55 % oder mehr bei 90 °C, wie dem Verfahren in der Beschreibung gemäß bestimmt, aufweist.

15. Folie nach einem der Ansprüche 9 bis 14, wobei die Folie des Weiteren eine Schrumpfung in Nichtstreckrichtung von 10 % oder weniger bei 80 °C, wie dem Verfahren in der Beschreibung gemäß bestimmt, aufweist.

16. Folie nach einem der Ansprüche 9 bis 15, wobei die Folie eine Dichte, wie in der Beschreibung definiert, von 1,350 g/cm$^3$ oder weniger, bevorzugt 1,340 g/cm$^3$ oder weniger, aufweist.

17. Folie nach einem der Ansprüche 9 bis 16, wobei die Folie eine inhärente Viskosität von 0,60 dl/g oder mehr, wie ASTM D 4603-96 gemäß bestimmt, aufweist.

**Revendications**

1. Composition de polyester comprenant un composant de diacide et un composant de diol,
   dans laquelle le composant de diacide comprend: i) de l'acide isophtalique présent à une concentration dans l'intervalle de 23% en moles à 30% en moles du diacide total, et ii) de l'acide téréphtalique; et
   dans laquelle le composant de diol comprend: i) du diéthylèneglycol présent à une concentration dans l'intervalle de 1,1% en moles à 3,5% en moles du diol total, et ii) de l'éthylèneglycol.

2. Composition de polyester selon la revendication 1, dans laquelle l'acide isophtalique est présent à une concentration dans l'intervalle de 24% en moles à 28% en moles du diacide total.

3. Composition de polyester selon l'une quelconque des revendications 1 et 2, dans laquelle le diéthylèneglycol présent à une concentration dans l'intervalle d'environ 1,5% en moles à environ 3,2% en moles du diol total, de préférence de 2,7% en moles à 3,2% en moles du diol total.

4. Composition de polyester selon l'une quelconque des revendications précédentes, dans laquelle l'acide isophtalique et le diéthylèneglycol sont présents à une concentration additionnée de 24% en moles à 33% en moles de la composition totale, de préférence de 27% en moles à 31% en moles de la composition totale.

5. Composition de polyester selon l'une quelconque des revendications précédentes, où la composition possède une température de transition vitreuse de 70°C ou plus, telle que déterminée selon la norme ASTM D 3418-97.

6. Composition de polyester selon l'une quelconque des revendications précédentes, où la composition possède une viscosité inhérente de 0,65 dl/g ou plus, telle que déterminée par la norme ASTM D 4603-96.

7. Composition de polyester selon l'une quelconque des revendications précédentes, comprenant en outre un additif.

8. Composition de polyester selon la revendication 7, dans laquelle l'additif comprend au moins un élément choisi dans le groupe constitué de colorant, de pigment, de charge, d'agent de ramification, d'agent anti-bloquant, d'antioxydant, d'agent antistatique, de biocide, d'agent gonflant, d'agent de couplage, d'ignifuge, de stabilisant thermique, de modificateur de la résistance au choc, de stabilisant de lumière ultraviolette, de stabilisant de lumière visible, de lubrifiant, de plastifiant, d'auxiliaire de mise en oeuvre, d'acétaldéhyde, de désoxygénant, de polymère barrière, d'agent glissant et de mélanges de ceux-ci.

9. Pellicule comprenant la composition de polyester selon la revendication 1.

10. Pellicule selon la revendication 9, où la pellicule possède une ténacité comme il est défini dans la description de 200 MPa ou plus, telle que déterminée selon la norme ASTM D882-02.

11. Pellicule selon l'une quelconque des revendications 9 et 10, où la pellicule possède une rétractation dans la direction étirée de 50% ou plus à 80°C, telle que déterminée selon la méthode dans la description.

12. Pellicule selon l'une quelconque des revendications 9 à 11, où la pellicule est une pellicule thermorétractable.

13. Pellicule selon l'une quelconque des revendications 9 à 12, où la pellicule possède un trouble de 1% ou moins mesuré à travers une épaisseur de pellicule de 0,05 mm, tel que déterminé selon la norme ASTM D 1003-00.

14. Pellicule selon l'une quelconque des revendications 9 à 13, où la pellicule possède une rétractation dans la direction étirée de 55% ou plus à 90°C, telle que déterminée selon la méthode dans la description.

15. Pellicule selon l'une quelconque des revendications 9 à 14, où la pellicule possède en outre une rétractation dans la direction non étirée de 10% ou moins à 80°C, telle que déterminée selon la méthode dans la description.

16. Pellicule selon l'une quelconque des revendications 9 à 15, où la pellicule possède une densité comme il est défini dans la description de 1,350 g/cm$^3$ ou moins, de préférence de 1,340 g/cm$^3$ ou moins.

17. Pellicule selon l'une quelconque des revendications 9 à 16, où la pellicule possède une viscosité inhérente de 0,60 dl/g ou plus, telle que déterminée selon la norme ASTM D 4603-96.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5859116 A
- US 6362306 A

- JP 5305667 A